# EUROPÄISCHE PATENTSCHRIFT

(11) **EP 3 531 166 B1**
(45) Veröffentlichungstag und Bekanntmachung des Hinweises auf die Patenterteilung: **07.06.2023**
(21) Anmeldenummer: 18157748.7
(22) Anmeldetag: 21.02.2018
(51) Int. Cl.: G01S 17/10, G01S 17/42, G01S 7/481, G01S 7/484, G01S 7/4863

(54) **VERFAHREN UND VORRICHTUNG ZUR OPTISCHEN DISTANZMESSUNG**
METHOD AND DEVICE FOR OPTICALLY MEASURING DISTANCES
PROCÉDÉ ET DISPOSITIF DE MESURE DE DISTANCE OPTIQUE

(43) Veröffentlichungstag der Anmeldung: 28.08.2019
(73) Patentinhaber: MicroVision, Inc., Redmond, WA 98052 (US)
(72) Erfinder: Birnbacher, Wolfgang, 22143 Hamburg (DE)
(74) Vertreter: RGTH

(56) Entgegenhaltungen:
- EP-A1- 3 168 641
- DE-A1- 19 717 399
- DE-A1-102010 006 943

## Beschreibung

### Technisches Gebiet

Die Erfindung betrifft ein Verfahren sowie eine Vorrichtung zur optischen Distanzmessung.

### Stand der Technik

Optische Distanzmessungen, insbesondere zur Anwendung in der fahrerlosen Navigation von Fahrzeugen, sind aus dem Stand der Technik bekannt. Sie beruhen auf dem Time-of-Flight-Prinzip, wobei zur Messung ein scannender Sensor, insbesondere ein LIDAR (Abkürzung für "light detection and ranging") Sensor eingesetzt wird, der periodisch Messpulse aussendet, die an Objekten reflektiert werden, wobei die reflektierten Messpulse detektiert werden. Aus der Bestimmung der Laufzeit der Messpulse von dem Sensor zu den Objekten und zurück kann mithilfe der Lichtgeschwindigkeit auf die Distanz zu diesen Objekten geschlossen werden.

Nachteilig an den aus dem Stand der Technik bekannten Verfahren ist allerdings, dass um Aliasing-Effekte zu vermeiden, die Messpulse nicht beliebig schnell hintereinander ausgesendet werden können, da sonst keine klare Zuordnung der Reflektionen möglich ist. Gleichzeitig kann die Laufzeit des Messpulses, d.h. die Zeit, die ein Messpuls braucht, bis er wieder die Scanvorrichtung erreicht, nicht beschleunigt werden. Um also einen weit entfernten Distanzbereich abzutasten, muss nach dem Emittieren eines Messpulses die doppelte Laufzeit bis zum weitest entfernten, möglichen Objekt gewartet werden, bis erneut gescannt werden kann. Ferner ist es im Stand der Technik nicht möglich, den Schwerpunkt der Distanzmessung auf einen bestimmten Fokusbereich, einem sogenannten "Area of interest", zu legen. Stattdessen wird ständig der komplette Bereich zwischen der Fokusbereich und der Scanvorrichtung vermessen, obwohl eigentlich nur der Fokusbereich von Interesse ist.

EP 3 168 641 A1 offenbart ein verbessertes Verfahren zur optischen Distanzmessung, nach dem unter Verwendung einer Sendematrix zum Aussenden von Messpulsen und einer Empfangsmatrix zum Empfangen dieser nur Untermengen der Sendeelemente der Sendematrix aktiviert werden.

### Darstellung der Erfindung: Aufgabe, Lösung, Vorteile

Der Erfindung liegt die Aufgabe zugrunde ein Verfahren sowie eine Vorrichtung zur Distanzmessung derart zu verbessern, dass das Verfahren zur Distanzmessung weniger Zeit beansprucht. Gleichzeitig soll mittels des Verfahrens ermöglicht werden den Fokus der Distanzmessung auf einen bestimmten Distanzbereich legen zu können.

Gelöst wird die oben genannte Aufgabe durch das erfindungsgemäße Verfahren zur optischen Distanzmessung, wobei das Verfahren das Aussenden von Messpulsen mittels Sendeelementen und das Empfangen von reflektierten Messpulsen mittels Empfangselementen umfasst. Den Empfangselementen ist jeweils ein Sendeelement zugeordnet. Die Zuordnung zwischen Sendeelementen und Empfangselementen ist vor allem eineindeutig.

Das Verfahren umfasst die Definition mindestens einer ersten Gruppe von Empfangselementen umfassend N Empfangselemente. Die der ersten Gruppe von Empfangselementen zugeordneten Sendeelemente senden jeweils mindestens einen Messpuls, insbesondere mehrere Messpulse, zur Distanzmessung aus. Ausgesandte Messpulse werden an mindestens einem Objekt in einem Messbereich reflektiert und mittels der Empfangselemente der ersten Gruppe in Form von reflektierten Messpulsen empfangen.

Zur Auswertung der von den Empfangselementen der ersten Gruppe empfangenen reflektierten Messpulse wird eine einzige Auswerteeinheit mithilfe von Zeitmultiplexing verwendet. Es wird somit jedem Empfangselement der ersten Gruppe pro ausgesandten Messpuls mittels des zugeordneten Sendelementes jeweils ein Messfensters mit einer Messfensterdauer zum Empfangen des Messpulses und jeweils ein Zeitabschnitt zur Übertagung von Daten zur Auswerteeinheit zugeordnet. Dabei ist der Zeitabschnitt kürzer als die Messfensterdauer. Die Auswerteeinheit ist nur während der jeweils zugeordneten Zeitabschnitte mit den Empfangselementen der ersten Gruppe aktiv verbunden ist.

Bei dem von dem Objekt reflektierten Messpuls handelt es sich um einen Messpuls, der zuvor ausgesendet wurde, sodass sich durch die Reflektion an dem Objekt seine Ausbreitungsrichtung verändert hat. Man kann den reflektierten Messpuls somit als Echo des ausgesendeten Messpulses verstehen. Insbesondere wird mittels des Verfahrens die Laufzeit der Messpulse zu den Objekten, an denen diese reflektiert wurden, ermittelt und aus dieser mithilfe der Lichtgeschwindigkeit die von dem jeweiligen Messpuls zurückgelegte Distanz zu dem Objekt bestimmt.

Eine optische Distanzmessung zeichnet sich dadurch aus, dass unter Ausnutzung von optischen Signalen, hier optischen Messpulsen, Distanzen bestimmt werden. Unter dem Begriff "Distanz" ist eine Entfernung zu verstehen. Unter der vom Messpuls zurückgelegten Distanz ist die Strecke zwischen dem Sendeelement, das den Messpuls ausgesandt hat, und dem Objekt, das diesen reflektiert hat, plus der Strecke zwischen dem Objekt und dem Empfangselement, das den entsprechenden reflektierten Messpuls empfangen hat, zu verstehen. Insbesondere umfasst das Verfahren die Berücksichtigung der genauen Position des Sendeelementes und des Empfangselementes, insbesondere in Relation zueinander. Da es sich bei dem mindestens einen Objekt typischerweise um ein dreidimensionales Objekt handelt, sodass einige Bereiche des Objektes näher und andere Bereiche des Objektes weiter entfernt angeordnet sein können, ist mit dem Begriff "Distanz zu dem Objekt" die Entfernung zu zumindest einer Stelle des Objektes gemeint, und zwar der Stelle, auf die der Messpuls aufgetroffen und an der diese reflektiert wurde. Mit Laufzeit ist die Zeit zu verstehen, die der Messpuls für die zuvor beschriebene Distanz gebraucht hat. Das Verfahren dient vor allem zur Distanzmessung zur Anwendung in der fahrerlosen Navigation von Fahrzeugen. Vor allem handelt es sich bei dem Verfahren um ein LIDAR Verfahren.

Bei einem Messpuls handelt es sich insbesondere um ein optisches, insbesondere elektromagnetisches, Signal. Der Messpuls hat vorzugsweise eine Wellenlänge, die nicht aus dem für das menschliche Auge sichtbaren Bereich stammt. Vorzugsweise wird aus Sicherheitsgründen unsichtbares Infrarot verwendet.. Bevorzugterweise weist ein Messpuls eine Pulsdauer auf, sodass man den Messpuls als eine zeitlich begrenzte Portion elektromagnetischer Strahlung verstehen kann. Da es sich beim Messpuls um ein elektromagnetisches Signal handelt und somit die Geschwindigkeit des Messpulses bekannt ist, kann aus der Laufzeit eines Messpulses mithilfe der Lichtgeschwindigkeit darauf geschlossen werden, welche Strecke der Messpuls in der Laufzeit hinter sich gebracht hat.

Bei der ersten Gruppe von Empfangselementen handelt es sich insbesondere um eine Untermenge der Empfangselemente einer Vorrichtung zur Distanzmessung. Dabei umfasst die erste Gruppe N Empfangselemente, wobei N eine positive natürliche Zahl ist. N ist insbesondere eine natürliche Zahl größer als 1, insbesondere zwischen 2 und 10. N ist insbesondere als Multiplexfaktor des Zeitmultiplexing zu verstehen. Dabei beschreibt N, von wie vielen Empfangselementen Daten mithilfe der Auswerteeinheit ausgewertet werden können, indem diesen entsprechende Zeitabschnitte zugeordnet werden.

Zur Auswertung der von den Empfangselementen der ersten Gruppe empfangenen reflektierten Messpulse wird eine einzige Auswerteeinheit mithilfe von Zeitmultiplexing verwendet. In anderen Worten wird die gleiche Auswerteeinheit zur Auswertung von Daten aller N Empfangselemente der ersten Gruppe verwendet. Dafür ist die Auswerteeinheit mit der ersten Gruppe von Empfangselementen derart verbunden, dass sie Daten von diesen auswerten kann. Insbesondere besteht zwischen der ersten Gruppe von Empfangselementen und der Auswerteeinheit ein einziger Kanal zur Datenübertragung. Mittels Zeitmultiplexing kann dieser einzige Kanal zur Übertragung von Daten von mehreren Empfangselementen, und zwar den Empfangselementen der ersten Gruppe, verwendet werden, indem den Empfangselementen der ersten Gruppe jeweils ein Zeitabschnitt zur Datenübertragung zugeordnet wird. Der Zeitabschnitt ist dabei kürzer als die Messfensterdauer gewählt, sodass innerhalb einer Messfensterdauer mehr als ein Empfangselement Daten zur Auswerteeinheit übertragen kann.

Das Messfenster ist derart gewählt, dass es sich direkt an einen jeweiligen Aussendezeitpunkt des Messpulses mittels des entsprechenden Sendelementes anschließt und dessen Messfensterdauer der doppelten maximalen Laufzeit eines Messpulses entspricht. Die maximale Laufzeit wird das Zeitfenster bezeichnet, die ein Messpuls brauchen würde um sich vom Sendelement zu einem maximal entfernten Objekt und zurück zum zugeordneten Empfangselement fortzubewegen. Die maximale Laufzeit definiert den Messbereich, aus dem reflektierte Messpulse zu erwarten sind.

Nach Ablauf der Messfensterdauer ist ein Empfang eines reflektierten Messpulses nicht mehr zu erwarten.

Sendet ein Sendeelement mehrere Messpulse aus, werden dem zugeordneten Empfangselement mehrere Messfenster zugeordnet, die zu unterschiedlichen Zeitpunkten beginnen, jedoch vorzugsweise alle die gleiche Messfensterdauer aufweisen.

Die Auswerteeinheit ist vorzugsweise nur während der jeweils zugeordneten Zeitabschnitte mit den jeweiligen Empfangselementen der ersten Gruppe aktiv verbunden. Unter dem Begriff "aktiv verbunden" ist insbesondere zu verstehen, dass nur während des jeweiligen Zeitabschnittes die Auswerteeinheit Daten von dem jeweiligen Empfangselement empfangen kann, während es ausgeschlossen ist, dass Daten von den anderen Empfangselementen der ersten Gruppe empfangen werden. Der Auswerteeinheit ist somit zeitlich selektiv mit nur einem Empfangselement der ersten Gruppe verbunden. In anderen Worten wird nur während des zugeordneten Zeitabschnittes eine Datenübertragung des entsprechenden Empfangselementes zur Auswerteeinheit erlaubt, während eine Datenübertragung von den übrigen Empfangselementen nicht möglich ist. Erfindungsgemäß erhält jedes Empfangselement somit ausschließlich den zugeordneten Zeitabschnitt zur Datenübertragung, sodass nur während des Zeitabschnittes empfangende Messpulse zur Auswertung weitergeleitet und somit ausgewertet werden. Außerhalb des Zeitabschnittes findet keine Datenübertragung statt, sodass keine Auswertung von außerhalb des Zeitabschnittes empfangenden Messpulsen möglich ist. Im Vergleich zum Stand der Technik ist somit die Auswerteeinheit nicht durchgängig für die Datenübertragung von nur einem Empfangselement eingeschaltet, sondern die Auswerteeinheit wird gezielt für bestimmte Zeitabschnitte mit den jeweiligen Empfangselementen der ersten Gruppe verbunden.

Der Auswerteeinheit ist vor allem dazu ausgebildet die empfangenen Messpulse in digitale Daten umzuwandeln. Bei der Auswerteeinheit handelt es sich insbesondere um einen Time-to-Digital Converter.

Durch das erfindungsgemäße Verfahren kann die Auswerteeinheit fortlaufend verwendet werden, wobei jedoch die Daten mehrerer Empfangselemente, und somit mehrere Messpulse, in einer kürzeren Zeit, d.h. in einer Zeit, in der ansonsten nur ein Messpuls ausgewertet werden könnte, ausgewertet werden können. Das Verfahren erlaubt eine optimale Nutzung des Auswerteeinheit. Durch Zeitmultiplexing wird die Auswerteeinheit kontinuierlich genutzt und maximal ausgelastet.

Insbesondere umfasst das Verfahren die Definition mehrerer erster Gruppen von Empfangselementen. Insbesondere werden sämtliche Empfangselemente einer Vorrichtung zur Durchführung des Verfahrens in Gruppen von Empfangselementen eingeteilt, die allesamt jeweils N Empfangselemente aufweisen. Dabei wird zur Auswertung der Empfangselemente einer Gruppe jeweils eine einzige Auswerteeinheit mittels Zeitmultiplexing verwendet. Es werden somit die gesamten Empfangselemente in Gruppen mit N Empfangselemente aufgeteilt, wobei den jeweiligen Gruppen jeweils eine Auswerteeinheit zugeordnet wird. Vor allem wird für jede der Gruppen eine Messung durchgeführt, wobei unter einer Messung die Definition der Gruppe umfassend N Empfangselemente, das Aussenden eines Messpulses mittels der den N Empfangselementen zugeordneten Sendelemente, das Empfangen der reflektierten Messpulse mittels der N Empfangselemente und die Auswertung der von den N Empfangselementen empfangenden reflektierten Messpulse mittels des Zeitmultiplexing und der einen Auswerteeinheit verstanden wird. Die Messungen können gleichzeitig oder aufeinander folgend durchgeführt werden.

Ist N beispielsweise 2, werden sämtliche Empfangselemente in Zweiergruppen aufgeteilt, wobei jeder Zweiergruppe zur Auswertung ein einziger Auswerteeinheit zugeordnet wird. Ist N beispielsweise 3, werden sämtliche Empfangselemente in Dreiergruppen aufgeteilt, wobei jeder Dreiergruppe eine Auswerteeinheit zugeordnet wird.

Erfindungsgemäß weisen die den N Empfangselementen zugeordneten Zeitabschnitte jeweils eine Dauer von der Messfensterdauer/N auf. Die Zeitabschnitte sind somit ein Bruchteil, und zwar ein N-ter Bruchteil, der Messfensterdauer. Dabei können die Zeitabschnitte zeitlich versetzt zueinander sein.

Insbesondere schließen sich die Zeitabschnitte, die den Empfangselementen der ersten Gruppe zuordnet sind, zeitlich aneinander an, sodass die Auswerteeinheit durchgängig aktiv mit einem Empfangselement verbunden und somit ausgelastet ist.

Die der ersten Gruppe von Empfangselementen zugeordneten Sendeelemente versenden vor allem zeitversetzt zueinander jeweils mindestens einen Messpuls zur Distanzmessung aus. Insbesondere beträgt ein zeitlicher Abstand zeitlich aufeinanderfolgender Messpulse die Messfensterdauer/N. Dabei stammen die zeitlich aufeinanderfolgenden Messpulse nicht von demselben Sendeelement, sondern von unterschiedlichen Sendeelementen, die zeitversetzt zueinander Messpulse versenden.

Die der ersten Gruppe von Empfangselementen zugeordneten Sendeelemente können jeweils eine Folge von Messpulsen aussenden, wobei aufeinander folgende, vom selben Sendeelement ausgesandte Messpulse einen zeitlichen Abstand aufweisen, die der Messfensterdauer entspricht. Zeitlich aufeinander folgende Messpulse von demselben Sendeelement haben somit vorzugsweise einen zeitlichen Abstand von der Messfensterdauer.

Da die den Empfangselementen zugeordneten Messfenster vorteilhafterweise mit Aussendezeitpunkt des entsprechenden Messpulses beginnen, haben auch die Messfenster, die einem Empfangselement bei Aussendung einer Folge von Messpulsen zugeordnet werden, einen Abstand von der Messfensterdauer. Zeitlich aufeinander folgende Messfenster aller N Empfangselemente sind vorzugsweise mit einem Abstand von der Messfensterdauer/N zeitlich zueinander versetzt.

Erfindungsgemäß ist der einem Empfangselement der ersten Gruppe zugeordnete Zeitabschnitt zeitlich innerhalb des jeweiligen Messfensters vor einem Ende des Messfensters angeordnet. Insbesondere bildet der Zeitabschnitt, in welchem das entsprechende Empfangselement aktiv mit der Auswerteeinheit zur Datenübertragung verbunden ist, den letzten N-ten Teil des dem Empfangselement pro genau diesem Messpuls zugeordneten Messfensters. Somit werden nur Messpulse ausgewertet, die im letzten N-ten Teil aus dem Messbereich reflektiert wurden, da an näheren Objekten reflektierte Messpulse zu früh, und somit außerhalb des zugeordneten Zeitabschnitts, eintreffen. Ist N beispielsweise 2, bildet der Zeitabschnitt, der dem Empfangselement zugeordnet wurde, die letzte Hälfte des Messfensters, sodass ausschließlich Messpulse aus der weiter entfernten Hälfte des Messbereichs ausgewertet werden. Ist N beispielsweise 3, entspricht der Zeitabschnitt dem letzten Drittel des Messfensters, sodass nur Messpulse aus dem am weitesten entfernten Drittel des Messbereichs zur Auswertung herangezogen werden.

Vorteilhafterweise kann den Zeitabschnitten ein Distanzbereich zugeordnet werden, wobei das Verfahren die Auswahl einer Zahl für N auf Basis eines Fokusbereichs der Distanzmessung umfasst. Ein Distanzbereich kann nahe, mittlere und/oder ferne Distanzen umfassen. Bei dem Fokusbereich, in anderen Worten "Area of Interest", der Distanzmessung handelt es sich insbesondere um einen Unterbereich des Messbereichs, der vom größten Interesse ist. Vor allem kann der Fokusbereich einen Bereich um die Horizontale umfassen, da insbesondere dort Objekte zu erwarten sind, deren Detektion in der fahrerlosen Navigation essentiell sind. Während der Messbereich sämtliche erreichbare Objekte und somit Distanzen umfasst, bildet der Fokusbereich eine Untermenge dieser. Beispielsweise kann der Fokusbereich nur besonders weit entfernte Distanzen umfassen.

Den Zeitabschnitten kann insbesondere daher ein Distanzbereich zugeordnet werden, da sie zeitlich vor dem Ende eines Messfensters angeordnet sind und reflektierte Messpulse von näher entfernten Objekten somit, je nach Wahl von N, außerhalb des zugeordneten Zeitabschnittes eintreffen. Je höher N gewählt wird, desto mehr verschiebt sich der Bereich, der gemessen wird, innerhalb des Messbereiches nach hinten. Ist N beispielsweise 2, bildet der Zeitabschnitt die letzte Hälfte des Messfensters. Ist N beispielsweise 4, bildet der Zeitabschnitt das letzte Viertel des Messfensters. Bei N = 4 im Gegensatz zu N = 2 werden weiter entfernte Objekte abgetastet.

Dies ist insbesondere daher von entscheidendem Vorteil, da verschiedene Distanzbereiche aus Systemsicht unterschiedlichen Informationsgehalt haben können. Somit kann N basierend auf einen Fokusbereich der Distanzmessung ausgewählt werden, wobei durch das Verfahren nicht ständig der komplette Bereich zwischen dem Fokusbereich und einer Vorrichtung zur Distanzmessung vermessen wird. Somit können durch das Zeitmultiplexing entweder nur die Messpulse, die aus dem Fokusbereich stammen, tatsächlich ausgewertet werden oder der Fokusbereich stärker abgetastet werden als die außerhalb des Fokusbereichs liegenden Bereiche des Messbereichs. Der Fokusbereich kann insgesamt kürzer belichtet werden kann, da man weniger Zeit zum Abtasten benötigt. Verwendet man dieselbe Zeit, kann eine deutliche höhere Auflösung erreicht werden.

Insbesondere kann das Verfahren die Durchführung von Messungen mit verschiedenen Multiplexfaktoren umfassen. Durch die Durchführung von Messungen mit verschiedenen Multiplexfaktoren kann der Fokusbereich stärker abgetastet werden, während dennoch ein größerer Bereich des Messbereichs weniger stark vermessen wird. Beispielsweise kann der gesamte Messbereich ausgemessen werden, während der Fokusbereich stärker abgetastet wird. Es ist somit möglich eine "Übertastung" eines Fokusbereichs innerhalb eines Messbereiches zu erreichen, und dies innerhalb einer Zeit, die mittels des Zeitmultiplexings kleiner ist als mit anderen Verfahren erforderlich. Insgesamt können somit unterschiedliche Distanzbereiche mit verschiedenen Tastraten vermessen werden, wobei die Multiplexfaktoren so gewählt werden, dass insbesondere der Fokusbereich, d.h. der am Distanzbereich, der vom größten Interesse ist, stärker abgetastet wird.

Insbesondere umfasst das Verfahren die Durchführung von Messungen mit N=2 und/oder Messungen mit N=3.

Vor allem umfasst das Verfahren die Durchführung von Messungen, die eine linear ansteigende oder linear absteigende Übertastung erzielen. Vor allem werden mittels des Verfahrens Messungen mit einem bestimmten Multiplexfaktor und im Anschluss Messungen mit linear absteigenden oder ansteigenden Multiplexfaktoren durchgeführt. Beispielsweise kann das Verfahren zunächst Messungen mit N = 2 und daran anschließend Messungen mit N = 3 umfassen oder andersherum.

Weiterhin kann das Verfahren zusätzlich Messungen umfassen, in denen der Zeitabschnitt, der einem Empfangselement zugeordnet ist und während welchem eine aktive Verbindung zur Datenübertragung mit der Auswerteeinheit besteht, gleich der Messfensterdauer ist. Dies entspräche einem theoretischen Multiplexfaktor von N=1. Bei diesen handelt es sich konsequenterweise nicht um Zeitmultiplexing entsprechend des obigen Verfahrens, da die Auswerteeinheit während des gesamten Messfensters mit einem Empfangselement aktiv verbunden ist. Dennoch können derartige Messungen eingesetzt werden, um den gesamten Messbereich auszuleuchten. Solche Messungen können vor allem zeitlich vor oder nach den Messungen mit N=2 durchgeführt werden, sodass sie zu einer linear ansteigenden oder absteigenden Übertastung beitragen.

In einem weiteren Aspekt umfasst die Erfindung eine Vorrichtung zur optischen Distanzmessung, wobei die Vorrichtung zur Durchführung eines oben beschriebenen Verfahrens ausgebildet ist. Erfindungsgemäß umfasst die Vorrichtung Sendeelemente und Empfangselemente, die vorzugsweise in einer Sendematrix beziehungsweise einer Empfangsmatrix zusammengefasst sind. Eine Matrix kann insbesondere als dreidimensionaler, insbesondere plattenförmiger, Körper verstanden werden, auf dessen einen Oberfläche die entsprechenden Elemente angeordnet sind. Insbesondere handelt es sich bei der Vorrichtung um eine Scanvorrichtung, vor allem einen LIDAR-Sensor. Vorzugsweise handelt es sich bei den Sendeelementen jeweils um einen Laser, während die Empfangselemente insbesondere jeweils von einer Diode, insbesondere einer Einzelphoton-Avalanche-Diode, gebildet werden. Erfindungsgemäß umfasst die Vorrichtung mindestens eine, vorzugsweise mehrere Auswerteinheiten, vor allem Time-to-Digital Converter, zur Auswertung empfangender Messpulse.

Ferner bezieht sich die vorliegende Erfindung auf ein Computerprogrammprodukt, das ein computerlesbares Speichermedium umfasst, auf dem ein Programm gespeichert ist, das es einem Computer ermöglicht, nachdem es in den Speicher des Computers geladen worden ist, ein oben beschriebenes Verfahren, gegebenenfalls im Zusammenspiel mit einer oben beschriebenen Vorrichtung, durchzuführen. Weiterhin betrifft die Erfindung ein computerlesbares Speichermedium, auf dem ein Programm gespeichert ist, das es einem Computer ermöglicht, nachdem es in den Speicher des Computers geladen worden ist, ein oben beschriebenes Verfahren, gegebenenfalls im Zusammenspiel mit einer oben beschriebenen Vorrichtung, durchzuführen.

### Kurze Beschreibung der Zeichnungen

Es zeigen schematisch:
- Figur 1: ein Verfahrensschema eines erfindungsgemäßen Verfahrens;
- Figur 2: ein Zeitdiagramm eines erfindungsgemäßen Verfahrens;
- Figur 3: ein Zeitdiagramm eines erfindungsgemäßen Verfahrens;
- Figur 4: den Zeitbedarf eines erfindungsgemäßen Verfahren sowie die Abtastung eines Messbereiches des Verfahrens; und
- Figur 5: die Abtastung eines Messbereiches für ein erfindungsgemäßes Verfahrens.

### Bevorzugte Ausführungsformen der Erfindung

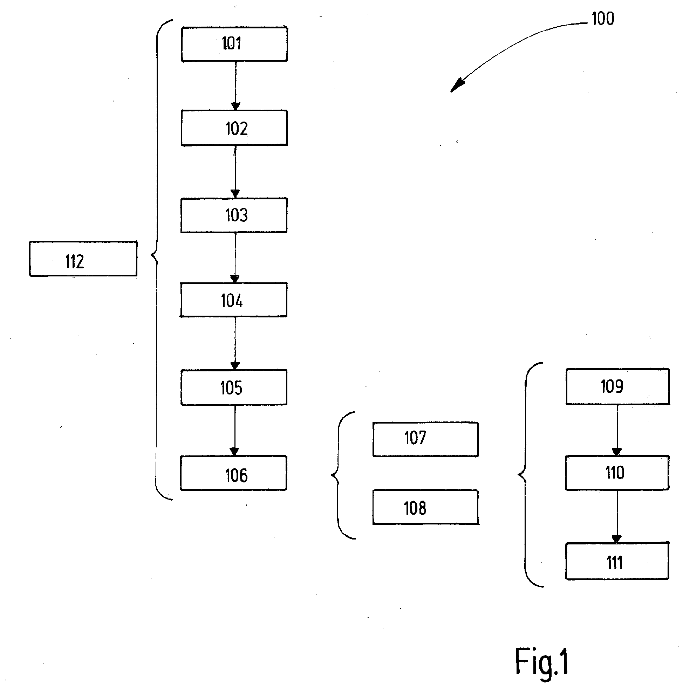

Figur 1 zeigt ein Verfahrensschema eines erfindungsgemäßen Verfahrens (100) zur Distanzmessung.

Das Verfahren umfasst die Definition (101) einer ersten Gruppe von Empfangselementen umfassend N Empfangselemente. Ferner erfolgt das Aussenden (102) mindestens eines Messpulses mittels der der ersten Gruppe von Empfangselementen zugeordneten Sendeelemente. insbesondere wird mittels der Sendeelemente jeweils eine Folge von Messpulsen ausgesandt (103). Ausgesandte Messpulse werden an Objekten im Messbereich reflektiert (104) und mittels der N Empfangselemente der ersten Gruppe empfangen (105). Zur Auswertung (106) der empfangenen reflektierten Messpulse wird eine einzige Auswerteeinheit verwendet (108) und zwar mittels Zeitmultiplexing (107). Dabei umfasst das Zeitmultiplexing (107) bzw. die Verwendung (108) einer einzigen Auswerteeinheit die Zuordnung (109) eines Messfensters pro Empfangselement und pro ausgesandten Messpuls sowie die Zuordnung (110) eines Zeitabschnittes pro Empfangselement und pro ausgesandtem Messpuls. Der Zeitabschnitt ist dabei kürzer als das Dauer des Messfensters. Eine Übertragung von Daten (111) zur Auswerteeinheit von einem Empfangselement der ersten Gruppe findet im nur innerhalb des zugeordneten Zeitabschnittes statt.

Die vorgenannten Schritte stellen die Durchführung (112) einer Messung mit dem Zeitmultiplexfaktor N dar. Dabei umfasst das Verfahren (100) insbesondere die Durchführung mehrerer Messungen mit demselben Zeitmultiplexfaktor. Vor allem werden sämtliche Empfangselemente einer Vorrichtung zur Durchführung des Verfahrens in Gruppen von N Empfangselementen eingeteilt und für jede dieser Gruppen die Messung durchgeführt.

Vorteilhafterweise umfasst das Verfahren die Durchführung mehrerer Messungen mit dem Zeitmultiplexing N = 2 sowie die Durchführung mehrerer Messungen mit dem Zeitmultiplexing-Faktor N = 3. Ferner kann das Verfahren Messungen umfassen, in denen der Zeitabschnitt gleich der Messfensterdauer ist.

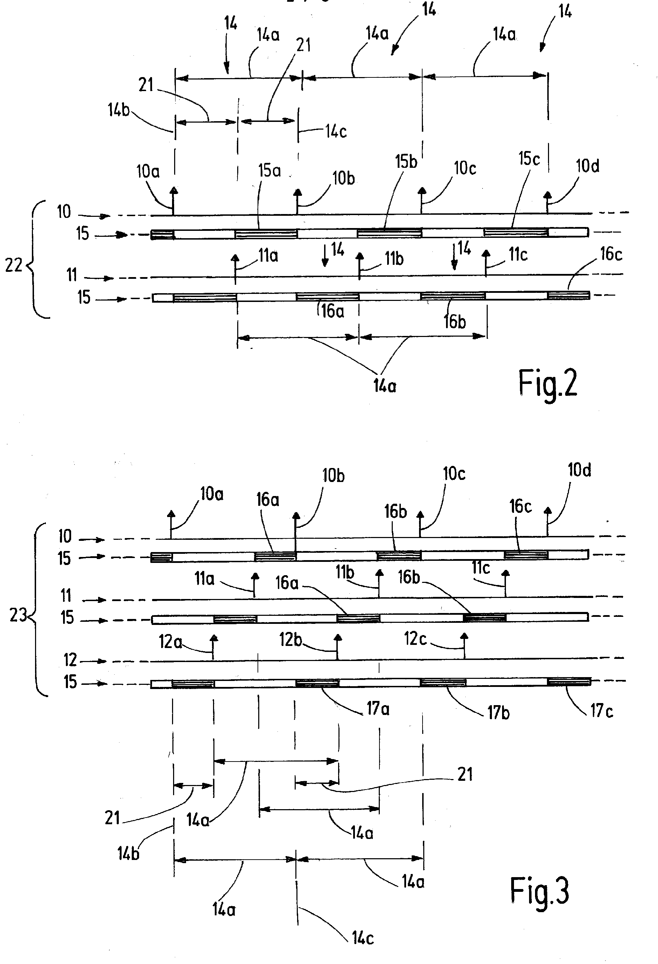

Figur 2 beschreibt ein Zeitdiagramm eines erfindungsgemäßen Verfahrens (100), und zwar eine zeitliche Abfolge (10) von Messpulsen eines ersten Sendeelementes, eine zeitliche Abfolge (11) von Messpulsen eines zweiten Sendeelementes sowie die Zeitpunkte (15) der aktiven Verbindung der den Sendeelementen zugeordneten Empfangselemente mit einer Auswerteeinheit.

In der ersten Zeile der Figur 2 ist die zeitliche Abfolge (10) von Messpulsen eines ersten Sendeelementes gezeigt. Das erste Sendeelement sendet vier Messpulse (10a, 10b, 10c, 10d) aus. Pro ausgesandtem Messpuls (10a, 10b, 10c, 10d) kann dem ersten Empfangselement, das dem ersten Sendeelement zugeordnet ist, ein Messfenster (14) zugeordnet werden, dessen Anfang (14b) mit Aussenden des Messpulses beginnt und dessen Ende (14c) nach Ablaufen der Messfensterdauer (14a) erfolgt. Die Messpulse (10a, 10b, 10c, 10d) werden mit einem zeitlichen Abstand ausgesandt, der der Messfensterdauer (14a) entspricht.

In der zweiten Zeile des Diagramms der Figur 2 sind die Zeitpunkte (15) gezeigt, zu denen das erste Empfangselement aktiv mit einer Auswerteeinheit verbunden ist. Das dem ersten Sendeelement zugeordnete erste Empfangselement ist pro ausgesandtem Messpuls des ersten Sendeelementes für einen Zeitabschnitt (15a, 15b, 15c) mit der Auswerteeinheit verbunden. Die Zeitabschnitte (15a, 15b, 15c) bilden die letzte Hälfte des jeweils zugeordneten Messfensters (14).

Zeitversetzt zum ersten Sendeelement versendet ein zweites Sendeelement Messpulse (11a, 11b, 11c) aus, deren zeitliche Abfolge (11) in der dritten Zeile der Figur 2 zu sehen ist. Auch die Messpulse (11a, 11b, 11c) des zweiten Sendeelementes weisen einen zeitlichen Abstand der Messfensterdauer (14a) zueinander auf. Der Zeitversatz zwischen den ausgesandten Messpulsen des ersten Sendeelementes und des zweiten Sendeelementes beträgt die Hälfte der Messfensterdauer (14a).

Das zweite Sendeelement ist einem zweiten Empfangselement zugeordnet, wobei die Zeitpunkte (15) der aktiven Verbindung des zweiten Empfangselements mit der Auswerteeinheit in der vierten Zeile der Figur 2 zu sehen sind. Dem zweiten Empfangselement sind pro ausgesandtem Messpuls (11a, 11b, 11c) des zweiten Sendeelementes ebenfalls Messfenster (14) zugeordnet, die sich direkt zeitlich an das Aussenden des entsprechenden Messpulses anschließen und die Messfensterdauer (14a) betragen. Dem zweiten Empfangselement ist pro ausgesandtem Messpuls (11a, 11b, 11c) des zweiten Sendeelementes ein Zeitabschnitt (16a, 16b) zugeordnet, zu dem dieser aktiv mit der Auswerteeinheit verbunden ist. Die Zeitabschnitte (16a, 16b) betragen jeweils erneut die letzte Hälfte des jeweiligen Messfensters.

Das erste und das zweite Empfangselement stellen eine erste Gruppe dar. Der zeitliche Abstand (21) zwischen aufeinander folgenden Messpulsen der Gruppe entspricht der Hälfte der Messfensterdauer (14a).

Sowohl das erste Empfangselement als auch das zweite Empfangselement sind mit derselben Auswerteeinheit verbunden. Es ist somit die Auswerteeinheit abwechselnd aktiv mit dem ersten Empfangselement und dem zweiten Empfangselement verbunden, und zwar jeweils für eine Dauer, die zeitlich der Hälfte der Messfensterdauer (14a) entspricht. Figur 2 stellt somit dar, wie Daten von zwei Empfangselementen mithilfe einer einzigen Auswerteeinheit und mithilfe von Zeitmultiplexing mit dem Faktor N=2 ausgewertet werden können. In anderen Worten zeigt Figur 2 den zeitlichen Ablauf von Messungen (22) mit N=2.

Figur 3 stellt einen zeitlichen Ablauf eines erfindungsgemäßen Verfahrens dar, bei dem der Multiplexfaktor N = 3 verwendet wird. In anderen Worten zeigt Figur 3 den zeitlichen Ablauf von Messungen (23) mit N=3.

Erneut stellen die oberen vier Zeilen die zeitliche Abfolge (10) der Messpulse eines ersten Sendeelementes, die Zeitpunkte (15) der aktiven Verbindung des entsprechenden ersten Empfangselementes mit einer Auswerteeinheit, die zeitliche Abfolge (11) von Messpulsen eines zweiten Sendeelementes und die entsprechenden Zeitpunkte (15) der aktiven Verbindung des entsprechenden zweiten Empfangselementes mit der Auswerteeinheit dar.

Es senden sowohl das erste Sendeelement als auch das zweite Sendeelement Zeitpulse mit einem zeitlichen Abstand von der Messfensterdauer (14a) aus. Ein drittes Sendeelement sendet ebenfalls Messpulse (12a, 12b, 12c) mit dem gleichen zeitlichen Abstand aus. Die zeitliche Abfolge (12) der Messpulse (12a, 12b, 12c) des dritten Sendeelementes ist in der fünften Zeile der Figur 3 gezeigt. Da der Multiplexfaktor nun N = 3 ist, ist der Abstand zwischen zeitlich aufeinanderfolgenden Messpulsen (21) ein Drittel der Messfensterdauer (14a). Ferner betragen die Zeitabschnitte (15a, 15b, 15c, 16a, 16b), zu denen das erste und das zweite Empfangselement mit der Auswerteeinheit verbunden sind, nur jeweils ein Drittel der Messfensterdauer (14a), und zwar entsprechen diese genau dem letzten Drittel des jeweils zugeordnetem Messfensters (14).

In der letzten Zeile der Figur 3 sind die Zeitpunkte der aktiven Verbindung (15) eines dritten Empfangselementes, das dem dritten Sendeelement zugeordnet ist, mit der Auswerteeinheit gezeigt. Dem dritten Empfangselement sind ebenfalls Zeitabschnitte (17a, 17b, 17c) zugeordnet, zu denen es aktiv mit der einen Auswerteeinheit verbunden ist. Alle drei Empfangselemente sind mit derselben Auswerteeinheit verbunden, wobei diese nur während der jeweiligen zugeordneten Zeitabschnitte (15a, 15b, 15c, 16a, 16b, 17a, 17b, 17c) mit der Auswerteeinheit aktiv verbunden ist. Die Dauer der Zeitabschnitte (15a, 15b, 15c, 16a, 16b, 17a, 17b, 17c) beträgt ein Drittel der Messfensterdauer (14a). Die Zeitabschnitte (15a, 15b, 15c, 16a, 16b, 17a, 17b) bilden das letzte Drittes des Messfensters (14).

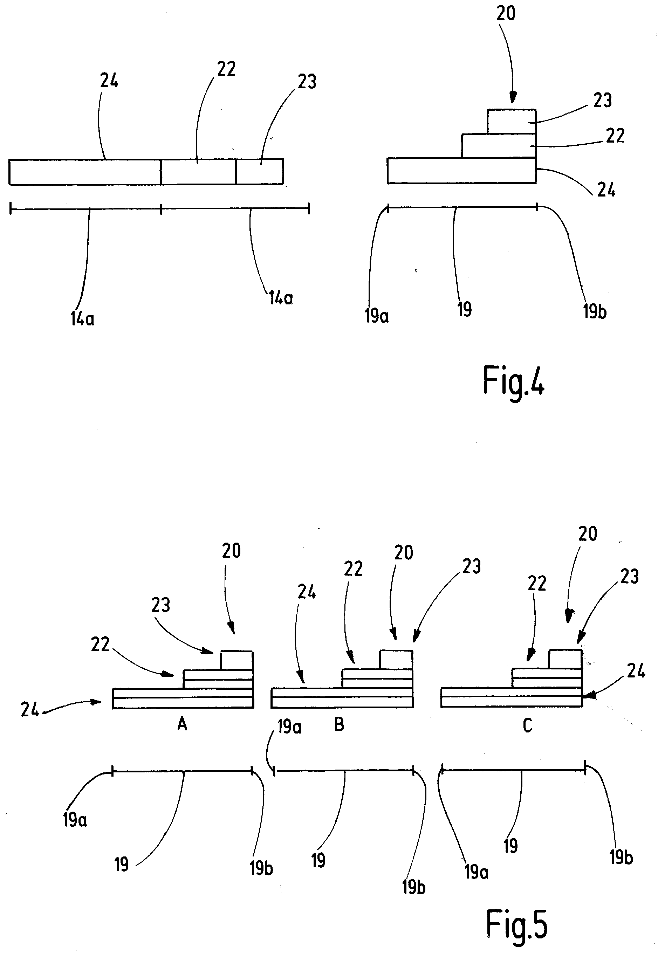

Figur 4 stellt in der linken Bildhälfte den Zeitbedarf und in der rechten Bildhälfte die Abtastung des Messbereiches (19) für ein erfindungsgemäßes Verfahren (100) dar.

Bei dem zugrundeliegenden Verfahren werden Messungen mit unterschiedlichen Multiplexfaktoren durchgeführt. Während das der Figur 4 zugrundeliegende Verfahren sowohl Messungen (22) mit dem Multiplexfaktor N = 2 als auch Messungen (23) mit N = 3 nach den Figuren 2 und 3 umfasst, umfasst es auch Messungen (24), bei denen die den Empfangselementen zugeordneten Zeitabschnitte die Dauer eines Messfensters aufweisen. Alle Messungen mit N=2 werden gleichzeitig durchgeführt. Gleich es gilt für die Messungen mit N=3.

Der zeitliche Bedarf für die Durchführung des gesamten Verfahrens beträgt eine gesamte Messfensterdauer (14a) für die oben beschriebenen Messungen (24), bei denen die den Empfangselementen zugeordneten Zeitabschnitte die Dauer eines Messfensters betragen, eine halbe Messfensterdauer (14a) für die Messungen (22) mit N = 2 und ein Drittel einer Messfensterdauer (14a) für die Messungen (23) mit N = 3. Insgesamt beträgt somit der Zeitbedarf weniger als zweimal der Dauer (14a) eines Messfensters (14).

In der rechten Bildhälfte der Figur 4 ist die Abtastung des Messbereichs (19) des Verfahrens zu sehen. Der Messbereich (19) erstreckt sich von einem naheliegenden Ende (19a) bis zu einem entfernten Ende (19b). Das entfernte Ende (19b) zeichnet sich dadurch aus, dass von Objekten, die weiter als dieses Ende entfernt sind, keine Reflektionen mehr zu erwarten sind. Es markiert somit die maximale Reichweite der Distanzmessung. Das naheliegende Ende (19a) schließt sich vorzugsweise direkt an die Sendeelemente an.

Da den Zeitabschnitten der Messungen mit verschiedenen Werten für N unterschiedliche Distanzbereiche zugeordnet werden können, wird im vorliegenden Fall der weit entfernte Bereich des Messbereichs (19) wesentlich höher abgetastet als der naheliegende Bereich. Dies liegt daran, dass bei Messungen (22) mit N=2 nur reflektierte Messpulse aus der weiter entfernten Hälfte des Messbereichs (19) ausgewertet werden, da zum jeweiligen Empfangszeitpunkt das entsprechende Empfangselement nicht aktiv mit der Auswerteeinheit verbunden ist. Bei Messungen (23) mit N=3 werden analog nur reflektierte Messpulse aus dem weit entferntesten Drittel des Messbereiches (19) ausgewertet. Bei Messungen (24), bei denen der Zeitabschnitt der Messfensterdauer (14a) entspricht, werden reflektierte Messpulse aus dem gesamten Messbereich (19) zur Auswertung weitergeleitet. Der Fokusbereich (20) des Verfahrens liegt somit auf den weiter entfernten Distanzbereich des Messbereichs (19).

Figur 5 stellt die Abtastung eines Messbereiches (19) bei einer linear ansteigenden Übertastung dar. Insgesamt gibt es drei Empfangselemente A, B, C, die nach folgendem Verfahren eingesetzt werden:
Die entsprechenden Sendeelemente senden im Folgenden Schema Messpulse aus: 2 x A, 2 x B, 2 x C, AB, BC, CA, 2 x ABC.

Es werden zunächst Messungen (24) durchgeführt, bei denen der Zeitabschnitt zur Datenübertragung der Empfangselemente mit einer Auswerteeinheit der gesamten Messfensterdauer zum Empfangen der Reflektion der Messpulse entspricht. Es werden zwei Messpulse von dem dem Empfangselement A zugeordneten Sendeelement ausgesandt, und zwar im Abstand von einer Messfensterdauer, dann zwei Messpulse von dem dem Empfangselement B zugeordnetem Sendeelement und dann zwei von dem dem Empfangselement C zugeordnetem Sendeelement. Die insgesamt 6 Messungen (24) werten Daten aus dem gesamten Messbereich (19) aus, da die Empfangselemente während der gesamten Messfensterdauer (14a) aktiv mit der Auswerteeinheit verbunden sind. Den Empfangselementen wird.

Im Anschluss werden drei Messungen (22) mit einem Zeitmultiplexfaktor von N = 2 durchgeführt. Und zwar senden zunächst das dem Empfangselement A zugeordnete Sendelement und das dem Empfangselement B zugeordnete Sendeelement je einen Messpulse aus, und zwar zeitversetzt um die halbe Messfensterdauer. Das gleiche gilt für das dem Empfangselement B zugeordnete Sendelement und das dem Empfangselement C zugeordnete Sendeelement und im Anschluss für das dem Empfangselement C zugeordnete Sendelement und das dem Empfangselement A zugeordnete Sendeelement.

Im Anschluss findet eine Messung (23) mit dem Zeitmultiplexfaktor N = 3 statt. Alle drei den Empfangselementen A, B und C zugeordneten Sendeelemente senden einen Messpulse zeitversetzt um ein Drittel der Messfensterdauer (14a).

Da der Zeitmultiplexfaktor N linear ansteigt, handelt es sich hierbei um eine linear ansteigende Übertastung. Wie in Figur 5 zu sehen ist, wird somit der gesamte Messbereich pro Empfangselement zweimal, und somit insgesamt sechsmal gescannt, der mittlere Distanzbereich insgesamt zwölfmal, während der weit entfernte Bereich insgesamt 18-mal gescannt wird. Der Fokusbereich (20) liegt somit eindeutig im weit entferntesten Bereich des Messbereiches (19). Die benötigte Zeit für die vorgenannten Messungen entspricht zehn Messfensterdauern (14a). Mittels des erfindungsgemäßen Verfahrens wird somit nicht nur eine maßgebliche Reduzierung der benötigten Zeit ermöglicht, sondern auch ein Festlegen einer höheren Abtastrate für einen Fokusbereich (20).

### Bezugszeichenliste

- 10: zeitliche Abfolge der Messpulse des ersten Sendeelementes
- 10a, 10b, 10c, 10d: Messpulse des ersten Sendeelementes
- 11: zeitliche Abfolge der Messpulse des zweiten Sendeelementes
- 11a, 11b, 11c: Messpulse des zweiten Sendeelementes
- 12: zeitliche Abfolge der Messpulse des zweiten Sendeelementes
- 12a, 12b, 12c: Messpulse des dritten Sendeelementes
- 14: Messfenster
- 14a: Dauer des Messfensters
- 14b: Anfang des Messfensters
- 14c: Ende des Messfensters
- 15: Zeitpunkte der aktiven Verbindung mit der Auswerteeinheit
- 15a, 15b, 15c, 16a,: Zeitabschnitte
- 16b, 17a, 17b, 17c 19: Messbereich
- 19a: naheliegendes Ende
- 19b: entferntes Ende
- 20: Fokusbereich
- 21: Abstand zeitlich aufeinander folgender Messpulse
- 22: Messungen mit N=2
- 23: Messungen mit N=3
- 24: Messungen mit Dauer des Zeitabschnittes = Messfensterdauer
- 100: Verfahren
- 101: Definition einer ersten Gruppe von Empfangselementen umfassend N Empfangselemente
- 102: Aussenden eines Messpulses mittels der den N Empfangselementen zugeordneten Sendelemente
- 103: Aussenden einer Folge von Messpulsen mittels der den N Empfangselementen zugeordneten Sendelemente
- 104: Reflektion an Objekten im Messbereich
- 105: Empfangen der reflektierten Messpulse mittels der N Empfangselemente
- 106: Auswertung der von den N Empfangselementen empfangenden reflektierten Messpulse
- 107: Zeitmultiplexing
- 108: Verwenden einer einzigen Auswerteeinheit
- 109: Zuordnung eines Messfenster pro Empfangselement und ausgesandtem Messpuls mittels des zugeordneten Sendelementes
- 110: Zuordnung eines Zeitabschnittes pro Empfangselement und ausgesandtem Messpuls
- 111: Übertagung von Daten zur Auswerteeinheit
- 112: Durchführung einer Messung mit dem Zeitmultiplexfaktor N

## Patentansprüche

1. Verfahren (100) zur optischen Distanzmessung,
wobei das Verfahren das Aussenden von Messpulsen mittels Sendeelementen und das Empfangen von reflektierten Messpulsen mittels Empfangselementen umfasst,
wobei den Empfangselementen jeweils ein Sendeelement zugeordnet ist,
wobei das Verfahren die Definition (101) mindestens einer ersten Gruppe von Empfangselementen umfassend N Empfangselemente umfasst,
wobei die der ersten Gruppe von Empfangselementen zugeordneten Sendeelemente jeweils mindestens einen Messpuls zur Distanzmessung aussenden (102),
wobei ausgesandte Messpulse an mindestens einem Objekt in einem Messbereich (19) reflektiert werden (104) und
wobei die Empfangselemente der ersten Gruppe die reflektierten Messpulse empfangen (105),
wobei zur Auswertung (106) der von den Empfangselementen der ersten Gruppe empfangenden reflektierten Messpulse eine einzige Auswerteeinheit mithilfe von Zeitmultiplexing (107) verwendet wird (108),
wobei jedem Empfangselement der ersten Gruppe pro ausgesandtem Messpuls mittels des zugeordnetem Sendeelementes jeweils ein Messfensters (14) mit einer Messfensterdauer (14a) zum Empfangen des Messpulses zugeordnet wird (109),
wobei jedem Empfangselement der ersten Gruppe pro ausgesandtem Messpuls mittels des zugeordnetem Sendeelementes jeweils ein Zeitabschnitt (15a, 15b, 15c, 16a, 16b, 17a, 17b, 17c) zur Übertagung (111) von Daten zur Auswerteeinheit zugeordnet wird (110),
**dadurch gekennzeichnet, dass**
der Zeitabschnitt (15a, 15b, 15c, 16a, 16b, 17a, 17b, 17c) kürzer als die Messfensterdauer (14a) ist,
wobei die den N Empfangselementen zugeordneten Zeitabschnitte (15a, 15b, 15c, 16a, 16b, 17a, 17b, 17c) jeweils eine Dauer von der Messfensterdauer (14a) geteilt durch N aufweisen, und
wobei der einem Empfangselement zugeordnete Zeitabschnitt (15a, 15b, 15c, 16a, 16b, 17a, 17b, 17c) zeitlich vor einem Ende (14c) des Messfensters (14) angeordnet ist,
wobei die Auswerteeinheit nur während der jeweils zugeordneten Zeitabschnitte (15a, 15b, 15c, 16a, 16b, 17a, 17b, 17c) mit den Empfangselementen der ersten Gruppe aktiv verbunden ist,
sodass jedes Empfangselement ausschließlich den zugeordneten Zeitabschnitt (15a, 15b, 15c, 16a, 16b, 17a, 17b, 17c) zur Übertragung von Daten erhält und nur während des Zeitabschnittes (15a, 15b, 15c, 16a, 16b, 17a, 17b, 17c) empfangende Messpulse zur Auswertung weitergeleitet und ausgewertet werden, und wobei außerhalb des Zeitabschnittes (15a, 15b, 15c, 16a, 16b, 17a, 17b, 17c) keine Übertragung von Daten stattfindet, sodass keine Auswertung von außerhalb des Zeitabschnittes empfangenden Messpulsen möglich ist.

2. Verfahren (100) nach Anspruch 1,
**dadurch gekennzeichnet, dass**
sich die Zeitabschnitte (15a, 15b, 15c, 16a, 16b, 17a, 17b, 17c) zeitlich aneinander anschließen.

3. Verfahren (100) nach einem der vorherigen Ansprüche,
**dadurch gekennzeichnet, dass**
die der ersten Gruppe von Empfangselementen zugeordneten Sendeelemente zeitversetzt zueinander jeweils mindestens einen Messpuls zur Distanzmessung aussenden.

4. Verfahren (100) nach Anspruch 3,
**dadurch gekennzeichnet, dass**
ein zeitlicher Abstand (21) zeitlich aufeinander folgender Messpulse die Messfensterdauer (14a) geteilt durch N beträgt.

5. Verfahren (100) nach einem der vorherigen Ansprüche,
**dadurch gekennzeichnet, dass**
die der ersten Gruppe von Empfangselementen zugeordneten Sendeelemente jeweils eine Folge von Messpulsen mit einem zeitlichen Abstand der Messfensterdauer (14a) aussenden.

6. Verfahren (100) nach einem der vorherigen Ansprüche,
**dadurch gekennzeichnet, dass**
den Zeitabschnitten (15a, 15b, 15c, 16a, 16b, 17a, 17b, 17c) ein Distanzbereich zugeordnet wird, da Messpulse von näher entfernten Objekten als der Distanzbereich außerhalb des zugeordneten Zeitabschnittes eintreffen,
wobei das Verfahren (100) die Auswahl einer Zahl für N auf Basis eines Fokusbereichs (20) der Distanzmessung umfasst,
wobei unter dem Fokusbereich (20) eine Area of Interest zu verstehen ist.

7. Verfahren (100) nach einem der vorherigen Ansprüche,
**dadurch gekennzeichnet, dass**
N als Multiplexfaktor des Zeitmultiplexing (107) zu verstehen ist,
wobei das Verfahren die Durchführung von Messungen mit verschiedenen Multiplexfaktoren umfasst.

8. Verfahren (100) nach Anspruch 7,
**dadurch gekennzeichnet, dass**
das Verfahren (100) die Durchführung von Messungen (22) mit N=2 umfasst.

9. Verfahren (100) nach einem der Ansprüche 7 oder 8,
**dadurch gekennzeichnet, dass**
das Verfahren (100) die Durchführung von Messungen (23) mit N=3 umfasst.

10. Vorrichtung zur optischen Distanzmessung,
**dadurch gekennzeichnet, dass**
die Vorrichtung zur Durchführung eines der Verfahren (100) nach einem der Ansprüche 1 bis 9 ausgebildet ist, wobei die Vorrichtung Sendeelemente, Empfangselemente und mindestens eine Auswerteinheit zur Auswertung empfangender Messpulse umfasst.

11. Computerprogrammprodukt, das ein computerlesbares Speichermedium umfasst, auf dem ein Programm gespeichert ist, das es einem Computer ermöglicht, nachdem es in den Speicher des Computers geladen worden ist, ein Verfahren (100) gemäß einem der Ansprüche 1 bis 9, im Zusammenspiel mit einer Vorrichtung (10) gemäß Anspruch 10, durchzuführen.

12. Computerlesbares Speichermedium, auf dem ein Programm gespeichert ist, das es einem Computer ermöglicht, nachdem es in den Speicher des Computers geladen worden ist, ein Verfahren gemäß einem der Ansprüche 1 bis 9, im Zusammenspiel mit einer Vorrichtung (10) gemäß Anspruch 10, durchzuführen.

## Claims

1. Method (100) for optical distance measurement,
wherein the method comprises transmitting measurement pulses by means of transmitting elements and receiving reflected measurement pulses by means of receiving elements,
wherein a transmitting element each is assigned to the receiving elements,
wherein the method comprises the definition (101) of at least one first group of receiving elements comprising N receiving elements,
wherein the transmitting elements assigned to the first group of receiving elements each transmit (102) at least one measurement pulse for distance measurement,
wherein transmitted measurement pulses are reflected (104) by at least one object in a measurement area (19), and
wherein the receiving elements of the first group receive (105) the reflected measurement pulses,
wherein a single evaluation unit is used (108) for evaluating (106) the reflected measurement pulses received by the receiving elements of the first group by means of time multiplexing (107)
wherein for each transmitted measurement pulse one measurement window (14) each with a measurement window duration (14a) is assigned (109) to each receiving element of the first group by means of the assigned transmitting element,
wherein for each transmitted measurement pulse one time segment (15a, 15b, 15c, 16a, 16b, 17a, 17b, 17c) each is assigned (110) to each receiving element of the first group by means of the assigned transmitting element for the transmission (111) of data to the evaluation unit,
**characterized in that**
the time segment (15a, 15b, 15c, 16a, 16b, 17a, 17b, 17c) is shorter than the measurement window duration (14a)
wherein the time segments (15a, 15b, 15c, 16a, 16b, 17a, 17b, 17c) assigned to the N receiving elements each have a duration of the measurement window duration (14a) divided by N, and
wherein the time segment (15a, 15b, 15c, 16a, 16b, 17a, 17b, 17c) assigned to a receiving element is arranged temporally before an end (14c) of the measurement window (14),
wherein the evaluation unit is actively connected to the receiving elements of the first group only during the respectively assigned time segments (15a, 15b, 15c, 16a, 16b, 17a, 17b, 17c)
so that each receiving element exclusively receives the assigned time segment (15a, 15b, 15c, 16a, 16b, 17a, 17b, 17c) for transmitting data and only measurement pulses received during the time segment (15a, 15b, 15c, 16a, 16b, 17a, 17b, 17c) are forwarded for evaluation and evaluated, and wherein no transmission of data takes place outside the time segment (15a, 15b, 15c, 16a, 16b, 17a, 17b, 17c), so that no evaluation of measurement pulses received outside the time segment is possible.

2. Method (100) according to claim 1,
**characterized in that**
the time segment (15a, 15b, 15c, 16a, 16b, 17a, 17b, 17c) follow one another in time.

3. Method (100) according to one of the preceding claims,
**characterized in that**
the transmitting elements assigned to the first group of receiving elements each transmit at least one measurement pulse for distance measurement with a time delay relative to one another.

4. Method (100) according to claim 3,
**characterized in that**
a temporal distance (21) of temporally successive measurement pulses is the measurement window duration (14a) divided by N.

5. Method (100) according to one of the preceding claims,
**characterized in that**
the transmitting elements assigned to the first group of receiving elements each transmit a sequence of measurement pulses with a temporal distance of the measurement window duration (14a).

6. Method (100) according to one of the preceding claims,
**characterized in that**
a distance range is assigned to the time segments (15a, 15b, 15c, 16a, 16b, 17a, 17b, 17c), as measurement pulses from objects closer away than the distance range arrive outside the assigned time segment,
wherein the method (100) comprises selecting a number for N based on a focus area (20) of the distance measurement,
wherein the focus area (20) is to be understood as an area of interest.

7. Method (100) according to one of the preceding claims,
**characterized in that**
N is to be understood as multiplexing factor of the time multiplexing (107),
wherein the method comprises performing measurements with different multiplex factors.

8. Method (100) according to claim 7,
**characterized in that**
the method (100) comprises performing measurements (22) with N=2.

9. Method (100) according to one of claims 7 or 8,
**characterized in that**
the method (100) comprises performing measurements (23) with N=3.

10. Device for optical distance measurement,
**characterized in that**
the device is configured for performing one of the methods (100) according to one of claims 1 to 9, wherein the device comprises transmitting elements, receiving elements and at least one evaluation unit for evaluating received measurement pulses.

11. Computer program product comprising a computer-readable storage medium on which a program is stored that, after having been loaded into the computer's memory, enables a computer to perform a method (100) according to one of claims 1 to 9, in interaction with a device (10) according to claim 10.

12. Computer-readable storage medium on which a program is stored that, after having been loaded into the memory of the computer, enables a computer to perform a method according to one of claims 1 to 9, in cooperation with a device (10) according to claim 10.

## Revendications

1. Procédé (100) de mesure optique de la distance,
le procédé comprenant l'émission d'impulsions de mesure au moyen d'éléments émetteurs et la réception d'impulsions de mesure réfléchies au moyen d'éléments récepteurs,
aux éléments récepteurs étant associé chaque fois un élément émetteur, le procédé comprenant la définition (101) d'au moins un premier groupe d'éléments récepteurs comprenant N éléments récepteurs,
les éléments émetteurs associés au premier groupe d'éléments récepteurs émettant (102) chacun au moins une impulsion de mesure pour la mesure de la distance,
des impulsions de mesure émises étant réfléchies (104) sur au moins un objet dans une plage de mesure (19) et
les éléments récepteurs du premier groupe réceptionnant (105) les impulsions de mesure réfléchies,
pour l'évaluation (106) des impulsions de mesure réfléchies réceptionnées par les éléments récepteurs du premier groupe, une unique unité d'évaluation étant utilisée (108) à l'aide de multiplexage temporaire (107),
à chaque élément récepteur du premier groupe étant associée par impulsion de mesure émise au moyen de l'élément émetteur associé chaque fois une fenêtre de mesure (14), assortie d'une durée (14a) de fenêtre de mesure pour la réception de l'impulsion de mesure (109),
à chaque élément récepteur du premier groupe étant associée par impulsion de mesure émise au moyen de l'élément émetteur associé chaque fois une période de temps (15a, 15b, 15c, 16a, 16b, 17a, 17b, 17c) pour la transmission (111) de données vers l'unité d'évaluation (110),
**caractérisé en ce que**
la période de temps (15a, 15b, 15c, 16a, 16b, 17a, 17b, 17c) est plus courte que la durée (14a) de la fenêtre de mesure,
les périodes de temps (15a, 15b, 15c, 16a, 16b, 17a, 17b, 17c) associées aux N éléments récepteurs présentant chacune une durée de la durée (14a) de fenêtre de mesure divisée par N, et
la période de temps (15a, 15b, 15c, 16a, 16b, 17a, 17b, 17c) associée à l'un élément récepteur étant placée dans le temps avant une fin (14c) de la fenêtre de mesure (14),
l'unité d'évaluation n'étant connectée activement avec les éléments récepteurs du premier groupe que pendant les périodes de temps (15a, 15b, 15c, 16a, 16b, 17a, 17b, 17c) respectivement associées,
de telle sorte qu'à chaque élément récepteur ne soit octroyée que la période de temps (15a, 15b, 15c, 16a, 16b, 17a, 17b, 17c) associée pour la transmission de données et que seules des impulsions de mesure réceptionnées pendant les périodes de temps (15a, 15b, 15c, 16a, 16b, 17a, 17b, 17c) soient transférées pour l'évaluation et évaluées, et hors des périodes de temps (15a, 15b, 15c, 16a, 16b, 17a, 17b, 17c), aucune transmission de données n'ayant lieu, de telle sorte qu'aucune évaluation d'impulsions de mesure réceptionnée hors de la période de temps ne soit possible.

2. Procédé (100) selon la revendication 1,
**caractérisé en ce que**
les périodes de temps (15a, 15b, 15c, 16a, 16b, 17a, 17b, 17c) se raccordent les unes aux autres dans le temps.

3. Procédé (100) selon l'une quelconque des revendications précédentes,
**caractérisé en ce que**
les éléments émetteurs associés au premier groupe d'éléments récepteurs émettent avec un décalage dans le temps chaque fois au moins une impulsion de mesure pour la mesure de la distance.

4. Procédé (100) selon la revendication 3,
**caractérisé**
**en ce qu'**un intervalle de temps (21) entre des impulsions de mesure successives dans le temps est la durée (14a) de fenêtre de mesure divisée par N.

5. Procédé (100) selon l'une quelconque des revendications précédentes, **caractérisé en ce que**
les éléments émetteurs associés au premier groupe d'éléments récepteurs émettent chaque fois une succession d'impulsions de mesure avec un intervalle de temps de la durée (14a) de fenêtre de mesure.

6. Procédé (100) selon l'une quelconque des revendications précédentes,
**caractérisé en ce qu'**aux périodes de temps (15a, 15b, 15c, 16a, 16b, 17a, 17b, 17c) est associée une plage de distance, car des impulsions de mesure d'objets moins éloignés que la plage de distance arrivent hors de la période de temps associée,
le procédé (100) comprend la sélection d'un nombre pour N sur la base d'une zone de mise au point (20) de la mesure de la distance,
sous le terme de zone de mise au point (20) étant entendue une zone d'intérêt.

7. Procédé (100) selon l'une quelconque des revendications précédentes, **caractérisé en ce que**
N est entendu en tant que coefficient de multiplexage du multiplexage temporel (107),
le procédé comprenant la réalisation de mesures avec différents coefficients de multiplexage.

8. Procédé (100) selon la revendication 7,
**caractérisé en ce que**
le procédé (100) comprend la réalisation de mesures (22) avec N = 2.

9. Procédé (100) selon l'une quelconque des revendications 7 ou 8,
**caractérisé en ce que**
le procédé (100) comprend la réalisation de mesures (23) avec N = 3.

10. Dispositif de mesure optique de la distance, **caractérisé en ce que**
le dispositif est conçu pour réaliser l'un des procédés (100) selon l'une quelconque des revendications 1 à 9, le dispositif comprenant des éléments émetteurs, des éléments récepteurs et au moins une unité d'évaluation, destinée à évaluer des impulsions de mesure réceptionnées.

11. Produit de programme informatique, qui comprend un support de mémoire lisible par ordinateur, sur lequel est mémorisé un programme, qui après avoir été chargé dans la mémoire, permet à un ordinateur de réaliser un procédé (100) selon l'une quelconque des revendications 1 à 9, en interaction avec un dispositif (10) selon la revendication 10.

12. Support de mémoire lisible par ordinateur, sur lequel est mémorisé un programme, qui après avoir été chargé dans la mémoire, permet à un ordinateur de réaliser un procédé selon l'une quelconque des revendications 1 à 9, en interaction avec un dispositif (10) selon la revendication 10.
